## Europäisches Patentamt
## European Patent Office
## Office européen des brevets

(19)

(11) Numéro de publication: **0 088 363**
**B1**

(12)
# FASCICULE DE BREVET EUROPEEN

(45) Date de publication du fascicule du brevet:
31.07.85

(51) Int. Cl.⁴: **F 28 F 9/00, F 16 L 3/22**

(21) Numéro de dépôt: **83102064.9**

(22) Date de dépôt: **03.03.83**

(54) Dispositif d'accrochage d'un panneau de tubes d'échange de chaleur.

(30) Priorité: **09.03.82 FR 8203928**

(43) Date de publication de la demande:
**14.09.83 Bulletin 83/37**

(45) Mention de la délivrance du brevet:
**31.07.85 Bulletin 85/31**

(84) Etats contractants désignés:
**AT BE CH DE FR GB IT LI NL SE**

(56) Documents cités:
**FR - A - 1 573 762**
**FR - A - 2 289 791**
**GB - A - 775 828**
**US - A - 2 231 462**

(73) Titulaire: **STEIN INDUSTRIE Société Anonyme dite:,
19-21, avenue Morane Saulnier, F-78140 Velizy
Villacoublay (FR)**

(72) Inventeur: **Francin, Paul, 12, rue du Quimberge-Nomain,
F-59310 Orchies (FR)**

(74) Mandataire: **Weinmiller, Jürgen et al, Zeppelinstrasse 63,
D-8000 München 80 (DE)**

**Description**

La présente invention concerne un dispositif d'accrochage d'un panneau de tubes d'échange de chaleur horizontaux ou à faible pente sur des poutres verticales.

On a déjà fixé de tels panneaux à l'aide de colliers formés autour des tubes, portés et soudés sur les poutres verticales, à l'aide de selles monobloc placées entre les poutres-support et les tubes, portées et soudées sur ceux-ci, ou à l'aide d'entretoises formées de deux parties coulissant l'une dans l'autre, l'une de ces parties étant soudée aux poutres verticales, et l'autre soudée aux tubes portés.

De tels dispositifs nécessitent une préparation soignée du panneau sur gabarit, et éventuellement un grand nombre d'opérations de soudage. Les pièces de liaison formées entre les poutres verticales et les tubes horizontaux comportent souvent des sections de contact faibles avec les tubes. S'il y a des vibrations en fonctionnement dans le panneau de tubes, il apparaît des concentrations de contraintes aux liaisons rigides entre tubes portés et support, ce qui peut entraîner des ruptures de tubes.

On a aussi proposé dans le document FR-A-2 473 697 de la demanderesse un dispositif d'accrochage d'un panneau de tubes d'échange de chaleur horizontaux, sur des tubes ou poutres verticales à ailettes longitudinales, comprenant a) sur les ailettes longitudinales une série d'épaulements à rebord en saillie vers le haut, b) une série de pièces spéciales formant loquet, et c) une série de cavaliers installés dans des trous des pièces formant loquet.

Un tel dispositif ne comporte pratiquement pas de soudure et n'implique pas un positionnement soigné sur gabarit, mais il nécessite la fabrication de pièces spéciales et de cavaliers et des assemblages entre ces pièces et ces cavaliers.

On a aussi proposé dans le document US-A-2 231 462 un dispositif de support pour panneau de tubes, comprenant une paire de fers plats verticaux identiques munis d'échancrures de forme circulaire dont l'un des bords est en forme de bec, ces fers plats étant inversés, puis accolés de manière que les échancrures de l'un des fers plats supportent les tubes et que celles de l'autre viennent s'appuyer sur la partie supérieure des tubes. Un tel dispositif nécessite pour son montage que l'on décale l'un des fers plats par rapport à l'autre la fois verticalement et latéralement, ce qui rend difficile le montage lorsque les panneaux de tubes sont proches les une des autres. Si l'on fait occuper aux échancrures la majeure partie la largeur des fers plats, pour réduire la largeur de ceux-ci, leur solidité est amoindrie.

La présente invention a pour but de procurer un dispositif d'accrochage d'un panneau de tubes d'échange de chaleur qui se prête à une fixation simple et rapide des tubes, sans opération de soudure et sans pièces de supportage intermédiaire, et qui ne nécessite pas la fabrication de pièces spéciales et l'assemblage de ces pièces, qui présente une bonne solidité, et dont on puisse effectuer le montage dans un intervalle réduit entre deux panneaux de tubes.

Le dispositif d'accrochage selon l'invention est caractérisé en ce qu'il comprend des paires de fers plats accolés, chacune constituant l'une des poutres verticales, et chacun des fers plats étant muni

a) d'une série d'échancrures de logement des tubes, comportant un partie sensiblement plane et horizontale et une partie opposée concave cylindrique se terminant du côté du bord du fer un bec, les échancrures de deux fers plats accolés étant en opposition verticalement, la distance entre les parties planes des échancrures des fers accolés pouvant être rendue supérieure au diamètre des tubes par un décalage vertical des fers plats en vue de l'introduction des tubes dans les échancrures, et la distance entre les leurs becs en position de maintien des tubes étant inférieure au diamètre des tubes, et

b) de trous de fixation des fers plats accolés l'un à l'autre en position de maintien des tubes.

De préférence, les fers plats sont munis en outre de trous d'accrochage des fers.

Pour effectuer l'accrochage d'un panneau de tubes d'échange de chaleur à l'aide du dispositif de l'invention, l'on décale verticalement les fers accolés de la hauteur nécessaire pour permettre l'introduction des tubes entre les parties planes des échancrures, puis l'on fait subir à l'un au moins des fers plats une translation verticale telle que les tubes soient bloqués dans les parties concaves des échancrures.

Il est décrit ci-après, à titre d'exemple et en référence aux figures du dessin annexé, un dispositif d'accrochage sans soudure d'un panneau de tubes d'échange de chaleur selon l'invention et une opération de montage de ces tubes.

La figure 1 représente en perspective vue de face une poutre verticale d'accrochage d'une section des tubes, avec la section correspondante de ceux-ci.

La figure 2 représente en perspective deux fers plats séparés l'un de l'autre avant leur assemblage pour constituer une poutre selon la figure 1.

La figure 3 représente les deux fers plats selon la figure 2 appliqués l'un contre l'autre, au moment de la mise en place des tubes dans leurs échancrures.

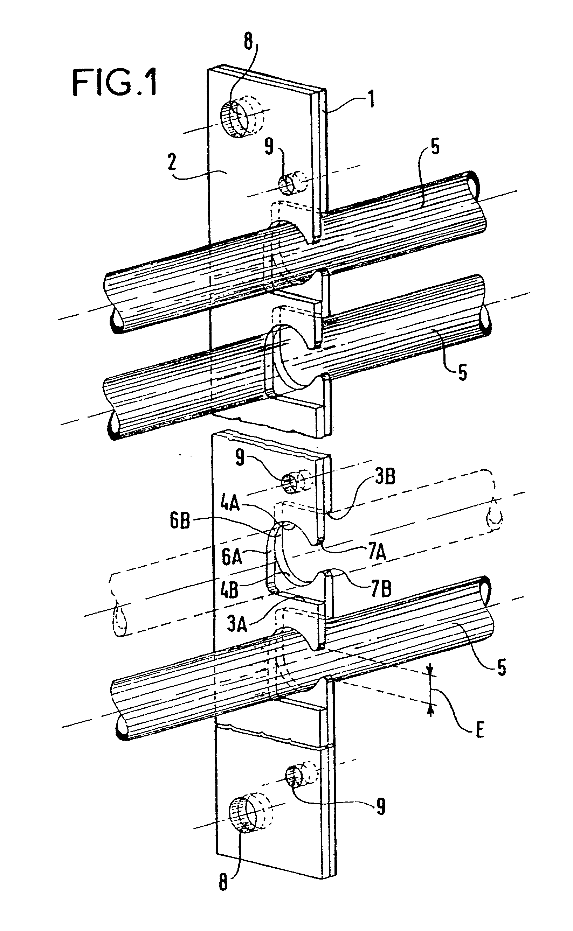

Dans la figure 1, la poutre verticale d'accrochage est constituée d'un fer plat de support 1 et d'un fer plat de verrouillage 2, appliqués l'un contre l'autre. Ces deux fers plats sont munis d'échancrures comprenant une partie plane, 3B pour le fer plat 1, 3A pour le fer plat 2, et une partie concave, 4B pour le fer plat 1, 4A pour le fer plat 2. Les deux fers sont assemblés retournés verticalement l'un par rapport à l'autre, la partie plane 3B du fer 1 étant au-dessus de la partie concave 4B, et la partie plane 3A du fer 2 au-dessous de sa partie concave 4A. La partie concave 4B du fer 1 permet de supporter le tube 5, et la partie concave 4A du fer 2 d'empêcher le soulèvement et la sortie du tube.

Les parties planes et concaves se raccordent au fond de l'échancrure par les parties verticales 6A, 6B.

Du côté de l'ouverture de l'échancrure , la partie concave se termine par un bec, 7B pour le fer plat 1, 7A pour le fer plat 2. L'espace libre E qui reste entre deux becs est inférieur au diamètre du tube, qui est donc emprisonné dans les échancrures en vis-à-vis des deux fers plats 1 et 2.

Les trous 8 sont rigoureusement vis-à-vis sur les deux fers plats 1 et 2, et déterminent ainsi des logements d'introduction des axes de suspension qui, outre leur rôle d'accrochage de la poutre verticale, maintiennent les deux fers plats de façon définitive dans leur position de maintien des tubes en service.

Les trous 9, également en vis-à-vis sur les deux fers plats 1 et 2, permettent par l'introduction de boulons, de maintenir les deux fers plats dans une position sensiblement proche de celle du fonctionnement pendant les périodes de transport et de manutention. Ils empêchent également des fers plats dans une direction parallèle aux tubes de l'échangeur.

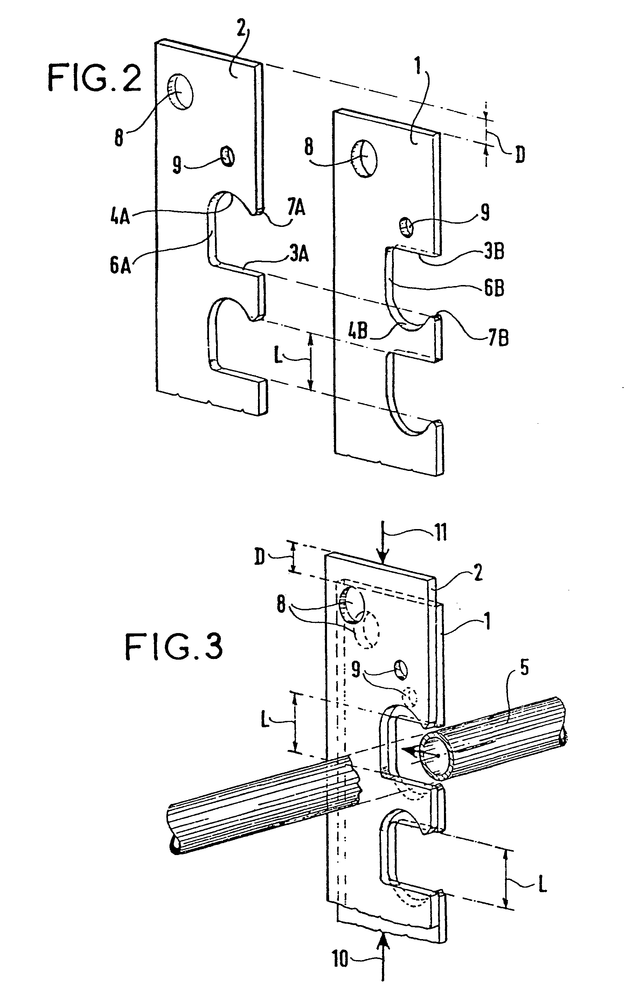

Les figures 2 et 3 représentent une opération de montage de la poutre de suspension sur les tubes d'un élément d'échange de chaleur. Le fer plat de support 1 et le fer plat de verrouillage 2 sont inversés verticalement l'un par rapport à l'autre avant l'introduction des tubes de l'échangeur dans les logements formés par les échancrures. Les deux fers plats 1 et 2 sont appliqués l'un contre l'autre, décalés verticalement d'une hauteur D, de façon à laisser un passage libre pour l'introduction des tubes entre les parties planes 3A et 3B de chaque échancrures en vis-à-vis, séparés par la distance verticale L, égale à la distance de la partie plane de l'un des fers au bec en regard.

Pendant cette phase de montage, les trous de logements des axes de suspension et les trous de boulonnage des fers sont aussi décalés verticalement de la hauteur D. Pour amener les fers plats en position de service, il suffit de glisser vers le haut le fer plat de support 1, ou vers le bas le fer plat de verrouillage 2, d'une hauteur D, comme représenté par les flèches 10, 11, pour emprisonner les tubes entre les parties concaves des échancrures et amener les trous 8 et 9 respectivement de l'un des fers vis-à-vis des trous correspondants de l'autre fer.

Bien que le dispositif qui vient d'être décrit en référence aux figures paraisse la forme de réalisation la plus avantageuse pour la mise en œuvre de l'invention, on comprendra que diverses modifications peuvent lui être apportées sans sortir du cadre de celle-ci. En particulier, on peut utiliser une poutre verticale porteuse formée de deux fers plats comportant des échancrures de chacun de leurs côtés pour supporter deux éléments tubulaires d'échange de chaleur. Les trous d'accrochage des poutres pourraient être remplacées par tous autres organes d'accrochage.

**Revendications**

1. Dispositif d'accrochage d'un panneau de tubes d'échange de chaleur horizontaux ou à faible pente (5) sur les poutres verticales, caractérisé en ce qu'il comprend des paires de fers plats (1, 2) accolés, chacune constituant l'une des poutres verticales, et chacun des fers plats étant muni

a) d'une série d'échancrures de logement des tubes, comportant une partie sensiblement plane et horizontale (3A, 3B) et une partie opposée concave cylindrique (4A, 4B) se terminant du côté du bord du fer par un bec (7A, 7B), les échancrures de deux fers plats accolés étant en opposition verticalement, la distance entre les parties planes d'échancrures des fers accolés pouvant être rendue supérieure au diamètre des tubes par un décalage vertical des fers plats en vue de l'introduction des tubes dans les échancrures, et la distance entre leurs becs en position de maintien des tubes étant inférieure au diamètre des tubes, et

b) des trous (9) fixation des fers plats accolés l'un à l'autre en position de maintien des tubes.

2. Dispositif selon la revendication 1, caractérisé en ce que les fers plats sont munis en outre de trous (8) d'accrochage des fers.

**Patentansprüche**

1. Vorrichtung zum Befestigen eines Bündels von waagerechten oder leicht geneigten Wärmetauscherrohren (5) an senkrechten Pfosten, dadurch gekennzeichnet, daß sie Paare von aufeinanderliegenden Flacheisen (1, 2) aufweist, von denen jedes Paar einen der senkrechten Pfosten bildet, und wobei jedes der Flacheisen aufweist

a) eine Reihe von Einkerbungen zur Aufnahme der Rohre, die einem im wesentlichen ebenen und waagerechten (3A, 3B) und einen entgegengesetzten konkaven zylindrischen Bereich (4A, 4B) aufweisen, der am Rand des Eisens in einer Nase (7A, 7B) endet, wobei die Einkerbungen zweier aufeinanderliegender Flacheisen senkrecht einander gegenüberliegen und der Abstand zwischen den ebenen Bereichen der Kerben der aufeinanderliegenden Flacheisen größer als der Durchmesser der Rohre gemacht werden kann aufgrund einer senkrechten Verschiebung der Flacheisen, um so die Rohre in die Kerben einzuführen, während der Abstand zwischen ihren Nasen in der Haltestellung der Rohre geringer ist als der Durchmesser der Rohre, und

b) Befestigungslöcher (9) für die aufeinanderliegenden Flacheisen, um sie in der Haltestellung der Rohre aneinander zu halten.

2. Vorrichtung nach Anspruch 1, dadurch gekennzeichnet, daß die Flacheisen außerdem mit Befestigungslöchern (8) für die Eisen versehen sind.

## Claims

1. A device for fixing bundles of horizontal or slightly inclined heat exchanger pipes (5) on vertical beams, characterized in that it comprises pairs of adjacent flat iron rods (1, 2), each pair constituting one of the vertical beams, and each of the flat iron rods being supplied with

a) a series of notches for housing the pipes comprising an essentially plane and horizontal portion (3A, 3B) and an opposed, concave cylindrical portion (4A, 4B) ending on the side of the edge of the iron rod in a nose (7A, 7B), the notches of two adjacent flat iron rods being vertically opposed, the distance between the plane portions of the notches of adjacent iron rods being susceptible to be rendered larger than the diameter of the pipes due to a vertical movement of the flat iron rods, for introducing the pipes into the notches, whereas the distance between their noses in the pipes maintaining position is smaller than the diameter of the pipes, and

b) holes (9) for fixing the adjacent flat iron rods one to the other in the pipes maintaining position.

2. A device according to claim 1, characterized in that the flat iron rods are further supplied with holes (8) for attaching the iron rods.

FIG.1

FIG.2

FIG.3

7